Europäisches Patentamt

European Patent Office

Office européen des brevets

(19)

(11) Publication number: **0 174 812**

A1

## (12) EUROPEAN PATENT APPLICATION

(21) Application number: **85306336.0**

(22) Date of filing: **06.09.85**

(51) Int. Cl.⁴: **F 16 B 39/24**
**F 16 C 41/00**

(30) Priority: **06.09.84 GB 8422566**
**18.10.84 GB 8426402**

(43) Date of publication of application:
**19.03.86 Bulletin 86/12**

(84) Designated Contracting States:
**DE FR GB IT**

(71) Applicant: **ROLLS-ROYCE LIMITED**
**65 Buckingham Gate**
**London, SW1E 6AT(GB)**

(72) Inventor: **Parker, John Dale**
**16 Grouch Hall Gardens Redbourn**
**St Albans Hertfordshire(GB)**

(74) Representative: **Leaman, Keith et al,**
**Rolls-Royce Limited P.O. Box 3 Filton**
**Bristol BS12 7QE(GB)**

(54) Locking element for fastening means.

(57) A locking element (15) for preventing relative rotational movement in one direction between two radially spaced components (10, 11), such as a nut and bolt, comprises a plurality of spragging members (17) and a plurality of resilient and deformable supporting members (18). The spragging members (17) are arranged to resist relative rotation in one direction but to allow it in an opposite direction. The supporting members (18), when deformed, act on the spragging members (17) to urge them to become wedged between the two components (10, 11) thereby creating a locking action. The supporting members (18) are adapted to be deformed by centrifugal force to ensure a locking action despite radial growth of the nut away from the bolt.

Fig. 2.

EP 0 174 812 A1

Croydon Printing Company Ltd

1

0174812

LOCKING ELEMENT FOR FASTENING MEANS

This invention relates to a locking element for insertion into an annular space between a radially inner component and a radially outer component for resisting relative rotational movement, in one direction only, between the two radially spaced components. The invention is particularly applicable for use with a threaded shaft and corresponding threaded nut in which the shaft and nut are rotated at high speed about a common longitudinal axis.

Locking elements are often used to prevent nuts or bolts from working loose due to the effects of vibration, heat or centrifugal force or combinations thereof.

A locking element is disclosed in British Patent Specification No. 1393257. In this specification a split ring, formed from a square-section length of stiff wire, is deformed to produce a number of lobes spaced circumferentially around the ring. This locking element resides in an annular space between, for example, a nut and bolt and is in contact with both at a number of discrete points according to the number of lobes. When the nut is done up, the split ring is deformed and an associated frictional force at the contact points prevents the nut from loosening off.

The locking element described above has several shortcomings. The first of which is the need to closely control the surface finish of the components in the areas on which the locking element bears. Variation in surface finish will make it difficult to predict the exact locking force applied. A method of ensuring a predictable surface finish is to plate the components with a material such as silver - but this is expensive. Another disadvantage of the known type of locking element is the need to closely control the dimensional accuracy of the fastening components. This requirement is for the same reason as above and again, cost is increased. A more acute problem arises if the fastening means is subjected to centrifugal force. Radial growth of a nut away from an associated threaded shaft due to centrifugal force will reduce the deformation of the locking element thereby decreasing the frictional locking force. If the rotational speed is high enough the locking element will become completely ineffective.

Another application of locking elements is for use with inserts. In order to bolt a component to a casing for example it may be necessary to fit an annular insert into the casing and then screw the bolt into the insert. Inserts are often made with an external thread which locates in a corresponding tapped hole in the casing, and an internal thread into which the bolt locates. Once the insert has been fitted, it is preferable to lock it in place. One method is to fit an internally and externally splined ring member into an annular space provided between the insert and the parent component i.e., the casing. The insert is provided with splines that correspond to internal splines on the ring member such that there is an interference fit which locates the insert in relation to the ring member. If the parent component is made of a soft material the ring member is swaged into the annular space thus locking the insert in position. If the parent component is made from a hard material splines, corresponding to external splines on the ring member, will have to be machined into the parent component.

The recited method of locking an insert is both elaborate and expensive. To remove the insert it may be necessary to completely destroy the ring member and possibly the insert with it. If engineering facilities are unavailable it will be difficult to remove and replace the insert.

The invention, as claimed, is intended to provide a locking element which remains effective even when at least one of the components to be locked in position is subject to radial growth. Furthermore, the invention seeks to provide a locking element which can tolerate variations in surface finish and dimensional accuracy of at least one of the components to be locked in position and is relative cheap to make.

The invention offers advantages over prior known locking elements in that the device will remain effective under centrifugal forces as well as reducing costs by being fairly cheap to manufacture and fit. The need for close control of surface finish and dimensional accuracy is also obviated.

The present invention will now be described by way of example in detail, with reference to drawings in which:-

Figure 1 is an axial cross-section of a locking element according to the present invention in a rotatable assembly;

Figure 2 is an enlarged sectional view along the line II-II in Fig. 1;

Figure 3 depicts a locking element according to the present invention which is manufactured from a single strip of material;

Figure 4 depicts a cross-section of an insert assembly together with a locking element according to the invention.

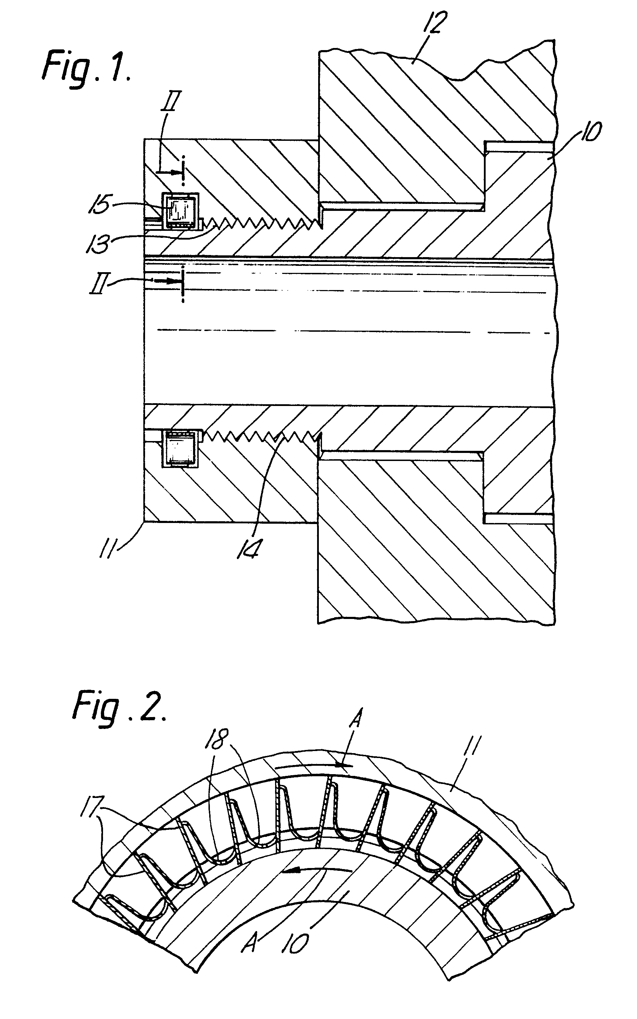

Referring to Figure 1, there is shown a driveshaft 10 and a threaded nut 11 for fastening a disc 12 to the shaft 10, all arranged concentrically. The driveshaft 10 is provided with a threaded portion 13 for co-operating with an internal thread 14 on the nut 11. A locking element 15 according to one aspect of the

4        0174812

present invention is located in a circumferential recess 16 in the nut 11.

Referring also to Figure 2, a plurality of spragging members 17 extend between the shaft 10 and nut 11. A plurality of supporting members 18 are further provided to ensure the spragging members 17 remain effective even when the shaft 10, nut 11 and disc 12 are rotated at high speeds.

The spragging members 17 allow relative rotational movement between the nut 11 and shaft 10 only in the direction shown by arrows A. This allow the nut to be screwed onto the shaft and torque-tightened. The spragging members 17 resist rotational movement in the opposite direction by virtue of their arrangement within the annular space between the nut 11 and shaft 10. The spragging members 17 are each arranged to extend substantially radially outward from the shaft 10 to the nut 11 but they also have a small circumferential component. The length of each spragging member is greater than the radial space between the nut 11 and shaft 10. Relative rotational movement between the shaft 10 and nut 11 in the direction A will urge the spragging members away from those components thus movement in that direction will be allowed. Relative rotational movement in the opposite direction is opposed by the spragging members 17 becoming wedged between the shaft 10 and nut 11 as there is not enough space for them to extend exactly radially from the shaft 10. Thus the spragging members act to resist movement in this direction thereby preventing the nut 11 from becoming undone.

The supporting members 18 which interconnect and support the spragging members 17 are resilient and may be initially deformed when the locking element 15 is inserted into the nut 11 and the nut tightened. Due to the resilience of the supporting members 18, and by virtue of their corrugated arrangement within the locking element, deformation of each supporting member 18 cause it to exert a substantially circumferentially directed force on its neighbouring spragging members 17. This force encourages the spragging members 17 to extend exactly radially outwards from the shaft 10 but due to the length of the spragging members 17 exceeding the radial distance between the nut 11 and shaft 10 the wedge action described above is achieved. Furthermore, any further deformation of the supporting members 18 due to centrifugal force will increase the tendency for the spragging members to become wedged. Therefore if the driveshaft 10 is rotated at high speed and the nut 11 is induced to 'grow' radially outwards a locking force will still remain to prevent the nut 11 from becoming undone.

Clearly it would be possible to construct the locking element to exert no static resistance and rely solely on centrifugal force if desired.

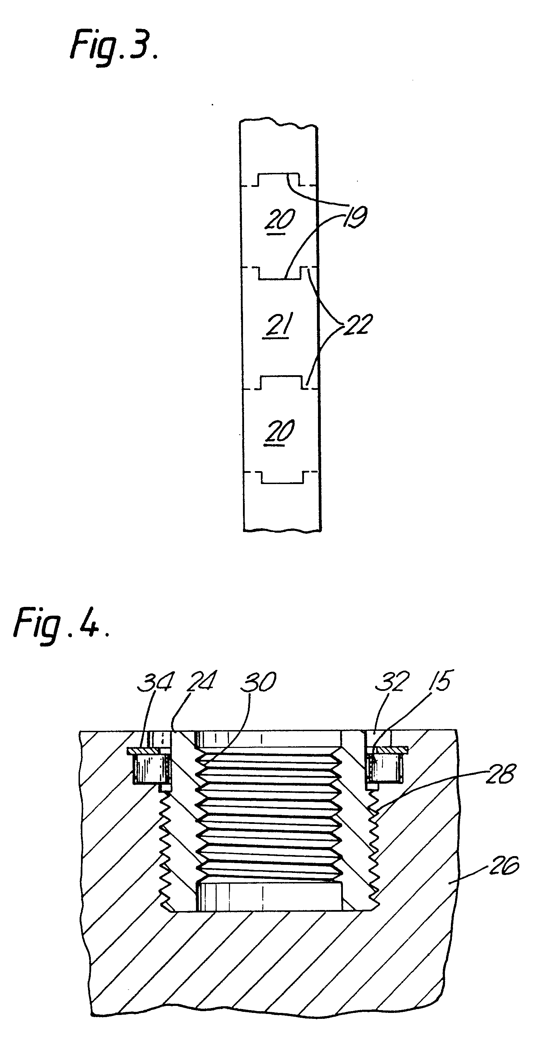

It is possible to construct the locking element 15 from a single strip of leaf spring type material. Figure 3 shows such a strip of material prior to being formed into a ring and joined together at its ends. The tangs 19 are arranged to contact the shaft 10 and the nut 11, the area 20 between each tang constitutes a spragging member while the areas 21 are deformed to act as the supporting members 18. The dotted lines 22 represent the boundary between a spragging member and a supporting member and are fold lines.

A special tool will be required in order for the nut 11 to be unscrewed. The tool would be used to urge the spragging members 17 away from the shaft 10 thus facilitating normal removal of the nut 11.

The locking element 15 is equally applicable in situation where centrifugal force is not a prime

6         **0174812**

consideration. Referring to figure 4 there is shown a threaded insert 24 located in a parent component 26 by way of a screw thread 28. The insert is provided with an internal screw-thread 30 for locating of a bolt or similar fastener (not shown). The locking element 15 as described above is located in an annular space 32 between the insert and the parent component and retained in place by a circlip 34 in this case.

In the figure 4 embodiment the locking element serves to allow the insert to be initially screwed into the parent component but prevents the insert subsequently from being unscrewed by for example, vibration and/or the action of fasteners being screwed into and out of the insert. If the insert needs to be replaced for any reason the locking element may either be prised out after the circlip has been removed or a special tool could be used to urge the spragging members out of contact with the insert while it is removed.

It will be understood that the locking element is not limited to use with inserts or nuts and is equally suitable in other forms of fasteners such bolts. Furthermore the locking elements may be constructed from a plastic of sufficient rigidity and used to secure screw caps to the tops of bottles or suchlike, the locking device being constructed and arranged to break or deform when the bottle is opened.

It is also possible to locate two locking elements adjacent one another for radially constraining a radially inward component and by using two devices prevent relative rotation between radially inner and radially outer components in any direction. The degree of resilience required to radially constrain the inner component can be chosen by altering the stiffness of the spragging members or locking members or both.

The locking element of the present invention is not just applicable to fasteners. It will also have applications in assemblies such as turbochargers whereby an authorised tampering or modification may be discovered by reference to the locking element, which is positioned to break or deform when the assembly is taken apart.

**0174812**

CLAIMS:

1.    A locking element(15) for insertion into an annular space between a radially inner component(10) and a radially outer component(11), characterised in that the locking element(15) comprises a plurality of resilient and deformable supporting members(18) and a plurality of spragging members(17), each spragging member(17) being adapted and arranged to resist relative rotation between the two components(10,11) in one direction by becoming wedged therebetween when acted on by the supporting members(18); the supporting members(18) being adapted and arranged to deform in use and thereby urge each spragging member(17) into wedgeable contact with the inner and outer components(10,11).

2.    A locking element(15) as claimed in claim 1 wherein the supporting members(18) are further deformable by centrifugal force to further urge each spragging member(17) into wedgeable contact with the inner and outer components(10,11).

3.    A locking element(15) as claimed in any one of the preceding claims constructed in an annular shape and comprising alternately a spragging member(17) and a supporting member(18), each spragging member(17) in use extending outward from the inner component(10) at an acute angle to a radial direction such that each spragging member(17) has a circumferential component of direction extending in a direction in which the outer component(11) may rotate relative to the inner component(10) and each spragging member(17) having a length exceeding a radial distance between the inner and outer components(10,11).

4.    A locking element(15) as claimed in any one of the preceding claims wherein each supporting member(18) supports an adjacent spragging member(17) and each supporting member(18) is attached to adjacent spragging members(17) and extends in a corrugated form therebetween.

5. A locking element(15) as claimed in any one of the preceding claims wherein deformation of each supporting member(18) causes it to exert a wedging force on adjacent spragging member(17) in a substantially circumferential direction.

6. A locking element(15) as claimed in any one of the preceding claims formed by deforming and shearing a single strip of material which is then formed in a ring by joining the ends of the strip together.

7. A locking element(15) as claimed in claim 6 wherein the strip is sheared to form a plurality of tangs(19), each of which extends across a portion of the width of the strip and are directed in a longitudinal direction, adjacent tangs(19) being directed in opposite directions.

8. A locking element(15) as claimed in claim 7 wherein fold lines(22) are formed across the strip of material adjacent each tang(19) thereby allowing the strip to adopt a corrugated shape prior to and after it being formed into a ring.

9. A locking element(15) as claimed in claim 8 wherein there are an even number of tangs(19) arranged in pairs of adjacent tangs(19), one tang in each pair contacting the radially inner component(10), the other contacting the radially outer component(11) and wherein the material extending between each tang(19) is alternately a spragging member(20).

10. A locking element as claimed in claim 9 wherein the strip constitutes around the circumference of the ring

10          0174812

alternately a spragging member(20) and a supporting member(21).

Fig.1.

Fig.2.

## Fig.3.

## Fig.4.

## EUROPEAN SEARCH REPORT

| | DOCUMENTS CONSIDERED TO BE RELEVANT | | EP 85306336.0 | |
|---|---|---|---|---|

| Category | Citation of document with indication. where appropriate, of relevant passages | Relevant to claim | CLASSIFICATION OF THE APPLICATION (Int Cl 4) |
|---|---|---|---|
| D,A | GB - A - 1 393 257 (ROLLS-ROYCE)<br>* Claim 1; fig. * | 1 | F 16 B 39/24<br>F 16 C 41/00 |
| A | GB - A - 1 411 299 (ROLLS-ROYCE)<br>* Claim 1; fig. 1,2,5 * | 1 | |
| A | GB - A - 1 548 295 (ADOLF SCHNORR)<br>* Claim 1; fig. 1-7 * | 1 | |
| A | CH - A - 534 314 (JOSE ROSAN et al.)<br>* Claim 1; fig. * | 1 | |
| | ---- | | **TECHNICAL FIELDS SEARCHED (Int Cl 4)**<br><br>F 16 B<br>F 16 C |

The present search report has been drawn up for all claims

| Place of search | Date of completion of the search | Examiner |
|---|---|---|
| VIENNA | 21-11-1985 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on or after the filing date
D : document cited in the application
L : document cited for other reasons

& : member of the same patent family, corresponding document

EPO Form 1503 03 82